# EUROPÄISCHE PATENTSCHRIFT

(11) **EP 2 670 638 B1**
(45) Veröffentlichungstag und Bekanntmachung des Hinweises auf die Patenterteilung: **11.11.2020**
(21) Anmeldenummer: 11794706.9
(22) Anmeldetag: 07.12.2011
(51) Int. Cl.: B60T 1/10, B60W 30/18

(54) **VERFAHREN ZUM BREMSEN EINES FAHRZEUGS MIT EINEM HYBRID-BREMSSYSTEM**
METHOD FOR BRAKING A VEHICLE HAVING A HYBRID BRAKE SYSTEM
PROCÉDÉ DE FREINAGE D'UN VÉHICULE À L'AIDE D'UN SYSTÈME DE FREINAGE HYBRIDE

(30) Priorität: 02.02.2011 DE 102011003494
(43) Veröffentlichungstag der Anmeldung: 11.12.2013
(73) Patentinhaber: Robert Bosch GmbH, 70442 Stuttgart (DE)
(72) Erfinder: BACHMANN, Michael, 71287 Weissach (DE); KORTHALS, Christian, 74321 Bietigheim-Bissingen (DE)
(86) Internationale Anmeldenummer: PCT/EP2011/072055
(87) Internationale Veröffentlichungsnummer: WO 2012/103972

(56) Entgegenhaltungen:
- DE-A1- 19 604 134
- DE-A1-102008 052 536

## Beschreibung

### Stand der Technik

Die Erfindung betrifft ein Verfahren zum Bremsen eines Fahrzeugs mit einem Hybrid-Bremssystem gemäß dem Oberbegriff des Patentanspruchs 1.

Aus dem Stand der Technik sind Fahrzeuge mit sogenannten Hybrid-Bremssystemen bekannt, die neben einer hydraulischen Bremsanlage auch eine elektrische Maschine nutzen, um das Fahrzeug zu bremsen. Im generatorischen Betrieb erzeugt die elektrische Maschine ein Schleppmoment, mit dem das Fahrzeug verzögert wird.

Solange der Fahrer relativ schwach bremst oder die von einem automatischen Bremsassistenten geforderte Soll-Verzögerung relativ klein ist, wird üblicherweise rein generatorisch gebremst, um elektrische Energie zurück zu gewinnen (so genannte Rekuperation). Die so gewonnene elektrische Energie wird in einem Energiespeicher, wie z.B: der Batterie, gespeichert und kann in anderen Fahrsituationen zum Antrieb des Fahrzeugs oder zur Versorgung elektrischer Verbraucher verwendet werden. Um möglichst viel Energie zurück zu gewinnen, wird die elektrische Maschine in der Regel bis zum Erreichen der Kapazitätsgrenze angesteuert und, erst wenn die Kapazitätsgrenze erreicht ist, die hydraulische Bremse zugeschaltet.

Aus der DE 196 04 134 A1 ist ein Verfahren und eine Vorrichtung zur Steuerung der Bremsanlage von Kraftfahrzeugen mit elektrischem Antrieb bekannt, bei dem in einem ersten Bereich des Fahrbremswunsches nahezu ausschließlich die regenerative Abbremsung das Bremsmoment aufbringt, wobei die Reibungsbremse im wesentlichen kein Bremsmoment aufbringt. Dies wird dadurch realisiert, dass das vom Fahrer durch die Bremspedalbetätigung in die Radbremszylinder einströmende Druckmittel durch entsprechende Steuerung über Auslassventile in eine Speicherkammer zurückgeführt wird. Eine Bremsbereitschaftsfunktion für eine Fahrzeugbremse ist aus der DE 10 2008 052 536 A1 bekannt.

Eine Eigenschaft bekannter hydraulischer Bremsanlagen besteht nun darin, dass sie erst mit einer gewissen Verzögerung Bremskraft aufbauen. Dies ist vor allem darauf zurückzuführen, dass die Bremsbacken zu Beginn einer Bremsbetätigung zunächst einen Leerweg überwinden müssen, bis sie an den Bremsscheiben anliegen. Um den Leerweg zu überwinden, muss zunächst eine bestimmte Menge an Bremsflüssigkeit in den Bremskreis gefördert werden, ohne dass eine Bremswirkung eintritt. Dieses so genannte Totvolumen ist stark abhängig von der Ausführung der Bremse sowie der Fahrsituation und ist daher schwer abschätzbar oder modellierbar. Bei Fahrzeugen mit bekannten Hybrid-Bremssystemen kommt es daher unmittelbar nach dem Zuschalten der hydraulischen Bremse zu einer unerwünschten Unterbrechung im Bremskraftaufbau, mit der Folge einer vorübergehend zu geringen Fahrzeugverzögerung.

### Offenbarung der Erfindung

Es ist daher Aufgabe der vorliegenden Erfindung, ein Verfahren zum Bremsen eines Fahrzeugs zu schaffen, bei dem das Fahrzeug nach dem Zuschalten einer hydraulischen Bremsanlage verzögert wird, ohne dass es zu einer unerwünschten Unterbrechung im Bremskraftverlauf kommt. Dabei soll es auch möglich sein, bei einem erforderlichen Abschalten des Generators, den Verlust an generatorischer Bremskraft unverzüglich durch die hydraulische Bremse zu kompensieren und somit z. B. eine konstante Verzögerung zu erzielen.

Gelöst wird diese Aufgabe gemäß der Erfindung durch die in den unabhängigen Patentansprüchen genannten Merkmale. Weitere Ausgestaltungen der Erfindung sind Gegenstand von Unteransprüchen.

Gemäß der Erfindung wird vorgeschlagen, ein Fahrzeug, das ein Hybrid-Bremssystem aufweist, in einer ersten Phase eines Bremsmanövers mittels einer nicht-hydraulischen Bremsanlage, wie z.B. eines elektrischen Generators, zu bremsen und die hydraulische Bremsanlage währenddessen in einen Zustand der Bremsbereitschaft zu bringen. Wenn die hydraulische Bremsanlage dann in einer späteren zweiten Phase zugeschaltet wird, spricht sie sofort an und kann unmittelbar, ohne Zeitverzug, Bremsmoment aufbauen. Dadurch kann das Gesamt-Bremsmoment stetig, ohne Verzögerungen, aufgebaut werden. Ebenso kann bei einem erforderlichen Abschalten des Generators eine konstante Verzögerung realisiert werden, da die hydraulische Bremse unverzüglich zur Kompensation des Verlusts an generatorischer Bremskraft zur Verfügung steht.

Um die hydraulische Bremsanlage in einen bremsbereiten Zustand zu bringen, wird vorzugsweise ein geringer Bremsdruck erzeugt, der dazu führt, dass sich die Bremsbacken in Richtung der gebremsten Elemente, wie z.B. der Bremsscheiben, bewegen. Die Bremsbacken werden dann in einem Zustand gehalten, in dem sie sich nahe am gebremsten Element befinden oder mit geringer Kraft daran anliegen, ohne ein relevantes Bremsmoment zu erzeugen. Die hydraulische Bremse kann somit beim nächsten Einsatz unmittelbar ansprechen und ohne Zeitverzug Bremskraft aufbauen.

Das vorstehend beschriebene Vorbereiten der hydraulischen Bremse wird auch als "Vorbefüllen" der Bremse bezeichnet. Der zum Vorbefüllen der Bremse erzeugte Bremsdruck beträgt üblicherweise wenige bar, wie z.B. 2 bar bis 5 bar.

Die Drehzahl des hydraulischen Stellers, wie z.B. einer Hydraulikpumpe, ist während des Vorbefüllens vorzugsweise kleiner als in einer Bremsphase.

Ein Auslösekriterium für das Vorbefüllen bzw. in Bereitschaft bringen der hydraulischen Bremsanlage kann z.B. das Aktivieren eines Stellgliedes der nicht-hydraulischen Bremsanlage sein. Das Vorbefüllen wird beispielsweise gestartet, sobald das nicht-hydraulische Stellglied, z. B. ein Elektromotor, aktiviert wird. Ebenso kann im Vorfeld einer bevorstehenden Abschaltung der nicht-hydraulischen Bremse eine hydraulische Bremskraftkompensation durch das Vorbefüllen vorbereitet werden.

Grundsätzlich macht ein Vorbefüllen der hydraulischen Bremse nur Sinn, wenn die hydraulische Bremse auch tatsächlich zugeschaltet wird. Das Auslösen der Vorbefüllung hängt daher vorzugsweise von verschiedenen Bedingungen ab, aus denen auf einen möglicherweise bevorstehenden Einsatz der hydraulischen Bremse geschlossen werden kann, z.B. von einer von einem automatischen Bremsassistenten geforderten Soll-Verzögerung, einem Soll-Moment oder einem anderen Sollwert. Wenn die Soll-Verzögerung beispielsweise kleiner ist als ein maximal mögliches Generatormoment, wird die hydraulische Bremse z. B. nicht in Bereitschaft gebracht, da das Fahrzeug allein durch den Generator gebremst werden kann. Das Auslösen der Vorbefüllung kann auch von einer dynamischen Größe, wie z.B. einem Soll-Verzögerungsgradient oder einem Soll-Momentengradient, abhängen.

Darüber hinaus kann auch eine weitere Bedingung, wie z. B. die aktuelle Verkehrssituation berücksichtigt werden. Wenn z.B. der Abstand des eigenen Fahrzeugs zu einem vorausfahrenden Fahrzeug klein ist, muss das Fahrzeug ggf. schnell verzögert werden. In diesem Fall kann die hydraulische Bremse z.B. unmittelbar vorbefüllt werden, sobald eine Bremsung eingeleitet wird. Ein weiteres Kriterium für das Vorbefüllen einer hydraulischen Bremse kann z.B. auch das Unterschreiten einer Grenzgeschwindigkeit sein, unterhalb derer der Generator abgeschaltet und die Hydraulik aktiviert wird.

Die Erfindung wird nachstehend anhand der beigefügten Zeichnungen beispielhaft näher erläutert. Es zeigen:

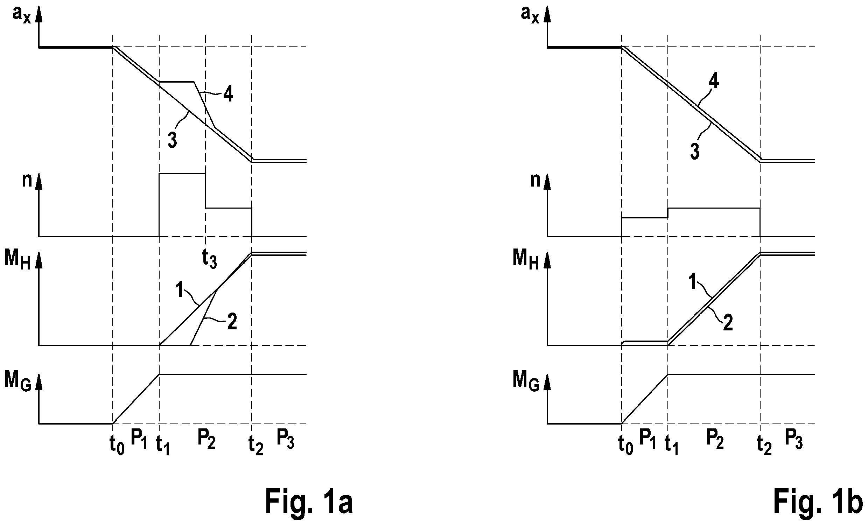

- Fig. 1a: den zeitlichen Verlauf verschiedener Kenngrößen bei einem Bremsvorgang eines Fahrzeugs mit einem Hybrid-Bremssystem gemäß dem Stand der Technik; und
- Fig. 1b: den zeitlichen Verlauf verschiedener Kenngrößen bei einem Bremsvorgang eines Fahrzeugs mit einem Hybrid-Bremssystem gemäß einer Ausführungsform der Erfindung.

Figur 1a zeigt den zeitlichen Verlauf verschiedener Kenngrößen bei einem Bremsvorgang eines Fahrzeugs, das mit einem Hybrid-Bremssystem ausgestattet ist. Das Hybrid-Bremssystem umfasst im vorliegenden Fall eine hydraulische Bremsanlage und eine elektrische Maschine, die zum Bremsen des Fahrzeugs genutzt wird. Im generatorischen Betrieb erzeugt die elektrische Maschine ein Schleppmoment, das zur Verzögerung des Fahrzeugs beiträgt.

Der hier dargestellt Bremsvorgang beginnt im Zeitpunkt t₀ mit einer Betätigung des Bremspedals durch den Fahrer. In einer ersten Phase P1 des Bremsvorgangs wird das Fahrzeug ausschließlich durch den elektrischen Generator gebremst. Das generatorische Bremsmoment M_{G} steigt in dieser Phase vom Wert 0 bis auf einen Maximalwert an, den es im Zeitpunkt t₁ erreicht. Das Fahrzeug verzögert in dieser Phase P1 in stetig zunehmender Weise.

Sobald das maximale Moment M_{G} des Generators erreicht ist, wird die hydraulische Bremsanlage zugeschaltet. Die Hydraulikpumpe läuft dann mit einer relativ hohen Drehzahl n, wie im zweiten Diagramm zu sehen ist. In dieser Phase üben die hydraulischen Radbremsen allerdings noch kein Bremsmoment M_{H} aus, da die Bremsbacken zunächst einen Leerweg überbrücken müssen, bis sie an den Bremsscheiben anliegen. Das an den Radbremsen tatsächlich ausgeübte Moment M_{H} (Ist-Moment 2) bleibt daher zunächst auf null und steigt erst nach einer gewissen Verzögerungszeit an. Der Verlauf des Ist-Moments 2 weicht daher erheblich vom Verlauf des Soll-Bremsmoments 1 ab.

Die verzögerte Bremswirkung der hydraulischen Radbremsen führt zu einer kurzzeitigen Unterbrechung im Verlauf 4 der Fahrzeugverzögerung aₓ. Erst wenn die Radbremsen den Leerweg überbrückt haben, erhöht sich die Längsverzögerung 4 des Fahrzeugs und erreicht nach einiger Zeit den Soll-Verlauf 3. Im Zeitpunkt t₄ wird die Drehzahl n der Hydraulikpumpe auf einen kleineren Wert eingestellt. Das Bremsmoment M_{H} der hydraulischen Bremsen steigt dann weiter an, bis ein vorgegebener, maximaler Sollwert erreicht ist.

Figur 1b zeigt den zeitlichen Verlauf derselben Kenngrößen wie Fig. 1, allerdings bei einem Fahrzeug mit einem Hybrid-Bremssystem gemäß einer speziellen Ausführungsform der Erfindung. Im Unterschied zum Bremsvorgang von Fig. 1a wird die hydraulische Bremsanlage in der ersten Phase P1 in einen Zustand der Bremsbereitschaft gebracht, wodurch sie nach dem Zuschalten unmittelbar ansprechen und zur Verzögerung des Fahrzeugs beitragen kann. Der Verlauf der Fahrzeugverzögerung 4 folgt somit dem Soll-Verlauf 3 und nimmt kontinuierlich zu.

Um die hydraulischen Radbremsen in Bremsbereitschaft zu bringen, wird mittels der Hydraulikpumpe ein geringer Bremsdruck von wenigen bar erzeugt, der dazu führt, dass sich die Bremsbacken in Richtung der Bremsscheiben bewegen und einen Leerweg zurücklegen. Die Bremsbacken werden dann in einem Zustand gehalten, in dem sie sich nahe an der Bremsscheibe befinden oder mit geringer Kraft daran anliegen. Die Hydraulikpumpe (nicht gezeigt) wird hierzu in der ersten Phase P1 mit einer relativ niedrigen Drehzahl n betrieben.

Nach dem Zuschalten der hydraulischen Bremsanlage im Zeitpunkt t₁ spricht diese sofort an. Das hydraulische Bremsmoment 1 folgt in diesem Fall unmittelbar der Soll-Vorgabe 2. Die Pumpen-Drehzahl ist in dieser Phase größer als in der ersten Phase P1.

Wie am Verlauf 4 der Fahrzeugverzögerung aₓ zu erkennen ist, nimmt die Verzögerung aₓ mit etwa gleichbleibender Steigung linear zu, bis im Zeitpunkt t₂ eine maximale Soll-Verzögerung erreicht ist.

## Patentansprüche

1. Verfahren zum Bremsen eines Fahrzeugs mit einem Hybrid-Bremssystem, wobei das Fahrzeug in einer ersten Phase (P1) eines Bremsmanövers mittels einer nicht-hydraulischen Bremsanlage gebremst wird und in einer späteren zweiten Phase (P2) eine hydraulische Bremsanlage zugeschaltet wird, um weiter Bremsmoment aufzubauen oder einen Bremskraftverlust der nicht-hydraulischen Bremsanlage zu kompensieren, **gekennzeichnet durch** folgende Schritte:
• Bringen der hydraulischen Bremsanlage in der ersten Phase (P1) in einen Zustand der Bremsbereitschaft, wozu mittels einer Hydraulikpumpe ein geringer hydraulischer Bremsdruck erzeugt wird, der dazu führt, dass sich die Bremsbacken in Richtung des gebremsten Elements bewegen, bis sie sich nahe am gebremsten Element befinden oder mit geringer Kraft daran anliegen,
• Halten der Bremsbacken im Zustand der Bremsbereitschaft, und
• Zuschalten der hydraulischen Bremsanlage, zu einem späteren Zeitpunkt, so dass sich das Gesamt-Bremsmoment stetig ohne Verzögerung aufbaut und dabei der Verlauf der Fahrzeugverzögerung (4) kontinuierlich zunimmt.

2. Verfahren nach Anspruch 1, **dadurch gekennzeichnet, dass** die hydraulische Bremsanlage in Bremsbereitschaft gebracht wird, sobald ein Stellglied der nicht-hydraulischen Bremsanlage aktiviert worden ist.

3. Verfahren nach einem der vorhergehenden Ansprüche, **dadurch gekennzeichnet, dass** die hydraulische Bremsanlage in den Zustand der Bremsbereitschaft gebracht wird, wenn ein Stellglied der nicht-hydraulischen Bremsanlage aktiv Bremskraft aufbaut und gleichzeitig eine weitere Bedingung erfüllt ist.

4. Verfahren nach Anspruch 3, **dadurch gekennzeichnet, dass** die weitere Bedingung umfasst, dass eine vom Fahrer oder einem automatischen Bremsassistenten geforderte Sollverzögerung ein Soll-Moment oder eine Soll-Bremskraft größer ist als ein vorgegebener Schwellenwert, dass ein Soll-Gradient, wie z.B. ein Soll-Verzögerungsgradient, größer ist als ein vorgegebener Schwellenwert, dass eine Größe aus einer Verkehrssituations-Erkennung eine mögliche Aktivierung der hydraulischen Bremsanlage signalisiert, ein bevorstehender Abbau an nicht-hydraulischer Bremskraft erkannt wird und/oder die Fahrzeuggeschwindigkeit unter einen vorgegebenen Schwellenwert sinkt.

5. Verfahren nach einem der vorhergehenden Ansprüche, **dadurch gekennzeichnet, dass** der in der ersten Phase (P1) erzeugte hydraulische Bremsdruck weniger als 10 bar beträgt.

6. Verfahren nach einem der vorhergehenden Ansprüche, **dadurch gekennzeichnet, dass** die Drehzahl (n) der Hydraulikpumpe in der ersten Phase (P1) kleiner ist als in der späteren zweiten Phase (P2), in der das Fahrzeug hydraulisch gebremst wird.

7. Steuergerät, umfassend Mittel zum Durchführen eines der vorstehend beanspruchten Verfahren.

## Claims

1. Method for braking a vehicle having a hybrid brake system, wherein the vehicle is braked in a first phase (P1) of a braking manoeuvre by means of a non-hydraulic brake system and, in a subsequently second phase (P2), a hydraulic brake system is switched on in order further to build up braking torque or to compensate for a loss of braking force of the non-hydraulic brake system, **characterized by** the following steps:
• bringing the hydraulic brake system in the first phase (P1) into a state of readiness for braking, for which purpose small hydraulic brake pressure is produced by means of a hydraulic pump, leading to the brake shoes moving in the direction of the brake element until they are located close to the brake element or lie against the latter with a small force,
• holding the brake shoes in the state of readiness for braking, and
• switching on the hydraulic brake system, at a later time, such that the overall braking torque builds up steadily without delay and, in the process, the profile of the vehicle deceleration (4) continuously increases.

2. Method according to Claim 1, **characterized in that** the hydraulic brake system is brought into readiness for braking as soon as an actuating element of the non-hydraulic brake system has been activated.

3. Method according to either of the preceding claims, **characterized in that** the hydraulic brake system is brought into the state of readiness for braking when an actuating element of the non-hydraulic brake system actively builds up braking force and at the same time a further condition is met.

4. Method according to Claim 3, **characterized in that** the further condition comprises that a desired deceleration required by the driver or by an automatic braking assistant, a desired torque or a desired braking force is greater than a predetermined threshold value, **in that** a desired gradient, for example a desired deceleration gradient, is greater than a predetermined threshold value, **in that** a variable from a traffic situation detection signalizes a possible activation of the hydraulic brake system, an imminent dissipation of non-hydraulic braking force is detected and/or the vehicle speed drops below a predetermined threshold value.

5. Method according to one of the preceding claims, **characterized in that** the hydraulic brake pressure produced in the first phase (P1) is less than 10 bar.

6. Method according to one of the preceding claims, **characterized in that** the rotational speed (n) of the hydraulic pump in the first phase (P1) is lower than in the subsequent second phase (P2) in which the vehicle is hydraulically braked.

7. Control device comprising means for carrying out one of the previously claimed methods.

## Revendications

1. Procédé de freinage d'un véhicule comprenant un système de frein hybride, le véhicule, dans une première phase (P1) d'une manœuvre de freinage, étant freiné au moyen d'une installation de freinage non hydraulique et, dans une deuxième phase ultérieure (P2), une installation de freinage hydraulique étant mise en circuit, afin de créer un couple de freinage supplémentaire ou de compenser une perte de force de freinage de l'installation de freinage non hydraulique, **caractérisé par** les étapes suivantes :
- commutation de l'installation de freinage hydraulique dans la première phase (P1) à un état de disponibilité pour le freinage, une faible pression de freinage hydraulique étant générée à cet effet au moyen d'une pompe hydraulique, laquelle a pour effet que les mâchoires de frein se déplacent dans la direction de l'élément freiné, jusqu'à ce qu'elles se trouvent à proximité de l'élément freiné ou qu'elles s'appliquent contre celui-ci avec une faible force,
- maintien des mâchoires de frein dans l'état de disponibilité pour le freinage, et
- mise en circuit de l'installation de freinage hydraulique, à un instant ultérieur, de telle sorte que le couple de freinage total augmente de manière constante sans décélération et que la courbe de décélération du véhicule (4) augmente ainsi de manière continue.

2. Procédé selon la revendication 1, **caractérisé en ce que** l'installation de freinage hydraulique est amenée à l'état de disponibilité pour le freinage dès qu'un actionneur de l'installation de freinage non hydraulique a été actionné.

3. Procédé selon l'une quelconque des revendications précédentes, **caractérisé en ce que** l'installation de freinage hydraulique est amenée à l'état de disponibilité pour le freinage lorsqu'un actionneur de l'installation de freinage non hydraulique génère activement une force de freinage et simultanément qu'une condition supplémentaire est satisfaite.

4. Procédé selon la revendication 3, **caractérisé en ce que** la condition supplémentaire comprend le fait qu'une décélération de consigne, un couple de consigne ou une force de freinage de consigne demandé(e) par le conducteur ou par un système de servofrein automatique soit supérieure à une valeur seuil prédéfinie, qu'un gradient de consigne, comme par exemple un gradient de décélération de consigne soit supérieur à une valeur seuil prédéfinie, qu'une grandeur obtenue à partir d'une détection d'une situation de trafic signale une activation possible de l'installation de freinage hydraulique, qu'une diminution imminente de la force de freinage non hydraulique soit détectée et/ou que la vitesse du véhicule descende en dessous d'une valeur seuil prédéfinie.

5. Procédé selon l'une quelconque des revendications précédentes, **caractérisé en ce que** dans la première phase (P1), la pression de freinage hydraulique générée est inférieure à 10 bars.

6. Procédé selon l'une quelconque des revendications précédentes, **caractérisé en ce que** le régime (n) de la pompe hydraulique dans la première phase (P1) est plus faible que dans la deuxième phase ultérieure (p2) dans laquelle le véhicule est freiné hydrauliquement.

7. Appareil de commande comprenant des moyens pour mettre en œuvre l'un des procédés revendiqués ci-dessus.
